# EUROPÄISCHE PATENTSCHRIFT

(11) **EP 2 940 926 B1**
(45) Veröffentlichungstag und Bekanntmachung des Hinweises auf die Patenterteilung: **25.01.2017**
(21) Anmeldenummer: 14166194.2
(22) Anmeldetag: 28.04.2014
(51) Int. Cl.: H04L 12/12

(54) **Verfahren zur Konfiguration eines Kommunikationsgeräts innerhalb eines industriellen Automatisierungssystems und Verteilereinheit für einen Konfigurationsserver eines industriellen Kommunikationsnetzes**
Method for configuring a communication device within an industrial automation system and distribution unit for a configuration server of an industrial communication network
Procédé de configuration d'un appareil de communication au sein d'un système d'automatisation industriel et unité de répartition pour un serveur de configuration d'un réseau de communication industriel

(43) Veröffentlichungstag der Anmeldung: 04.11.2015
(73) Patentinhaber: Siemens Aktiengesellschaft, 80333 München (DE)
(72) Erfinder: Albrecht, Harald, 90475 Nürnberg (DE)

(56) Entgegenhaltungen:
- US-A1- 2008 052 505
- US-A1- 2010 111 081
- US-A1- 2012 113 863
- US-A1- 2012 207 018

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus US 2005 0041671 A1 ist ein Kommunikationssystem mit zumindest einem ersten und zweiten Router bekannt, bei dem der zweite Router zumindest ein IPv6-Adresspräfix vom ersten Router anfordert. Dabei umfasst der erste Router eine Speichereinheit für IPv6-Adresspräfixe, von denen ein zumindest IPv6-Adresspräfix auf Anforderung des zweiten Routers bekanntgegeben wird. Der zweite Router umfasst eine Einheit zur Erzeugung eines weiteren IPv6-Adresspräfixes auf Basis des durch den ersten Router bekanntgegebenen IPv6-Adresspräfixes. Der weitere IPv6-Adresspräfix wird von einem an den zweiten Router angeschlossenen Kommunikationsgerät zur Erzeugung einer IPv6-Adresse verwendet und hierzu durch den zweiten Router bekanntgegeben.

DE 10 2011 088161 A1 offenbart ein Verfahren zum Betriebs eines IPv6-Kommunikationsnetzes, bei dem einem jeweiligen Kommunikationsgerät eine Ortsinformation zugeordnet wird, die in eine dem Kommunikationsgerät zugeordnete Kommunikationsnetzadresse eingefügt wird. Dies kann beispielsweise auf Basis von DHCPv6 implementiert werden. Mittels Ortsinformationen umfassender Kommunikationsnetzadressen können Kommunikationsgeräte aufwandsarm lokalisiert und lokal angesteuert werden.

In US 2008/052505 A1 ist ein System zur Konfiguration einer Datenverarbeitungsanlage mit einer Vielzahl von Komponenten beschrieben. Diese Komponenten sind zur Konfiguration der Datenverarbeitungsanlage miteinander verbindbar. Zumindest ein Konfigurationsmodul ist in eine Verbindung von mindestens zwei Komponenten zwischengeschaltet. Auf ein von einem Steuermodul an das Konfigurationsmodul gesendetes Signal wird eine Verbindung zwischen den zwei Komponenten bereitgestellt. Durch das Bereitstellen dieser Verbindung wird die Datenverarbeitungsanlage konfiguriert.

Der vorliegenden Erfindung liegt die Aufgabe zugrunde, ein Verfahren zur Konfiguration eines IPv6-Kommunikationsgeräts mit einer automatisierten Zuweisung eines topologischen bzw. hierarchischen Gerätenamens anzugeben sowie ein entsprechendes Kommunikationsgerät zu schaffen.

Diese Aufgabe wird erfindungsgemäß durch ein Verfahren mit den in Anspruch 1 angegebenen Merkmalen und durch ein Kommunikationsgerät mit den in Anspruch 11 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Konfiguration eines Kommunikationsgeräts innerhalb eines industriellen Automatisierungssystems übermittelt eine Konfigurationseinheit des Kommunikationsgeräts bei einer Inbetriebnahme des Kommunikationsgeräts ein Datagramm mit einer Konfigurationsanforderung an einen Konfigurationsserver. Die Konfigurationseinheit ist beispielsweise ein DHCPv6-Client (Dynamic Host Configuration Protocol), während der Konfigurationsserver vorzugsweise ein DHCPv6-Server ist. Das Datagramm mit der Konfigurationsanforderung bei seiner Übermittlung mittels zumindest einer teilnetzindividuellen Verteilereinheit an den Konfigurationsserver weitergeleitet wird. Die teilnetzindividuelle Verteilereinheit ist vorzugsweise ein DHCPv6-Relay.

Erfindungsgemäß weist der Konfigurationsserver dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Des weiteren erstellt der Konfigurationsserver eine zumindest den ersten Gerätenamensbestandteil umfassende Konfigurationsinformation und übermittelt ein Datagramm mit der Konfigurationsinformation an das zu konfigurierende Kommunikationsgerät. Das Datagramm mit der Konfigurationsinformation wird bei seiner Übermittlung an das Kommunikationsgerät mittels der zumindest einen teilnetzindividuellen Verteilereinheit weitergeleitet. Aus den topologischen Gerätenamensbestandteilen und einem innerhalb seines Teilnetzes eindeutigen Namensbestandteil erzeugt die Konfigurationseinheit des Kommunikationsgeräts dessen Gerätenamen.

Das erfindungsgemäße Verfahren kann in Ethernet-Kommunikationsnetzen ohne IP-Subnetzbildung angewendet werden. Insbesondere sind dabei keine IP-Router zur Bildung von Domänengrenzen erforderlich. Dies reduziert Kosten für entsprechende Kommunikationsgeräte und vereinfacht sowohl Konfiguration als auch Adressplanung. Darüber hinaus ermöglicht das erfindungsgemäße Verfahren eine deutliche Aufwandsreduktion für eine Vorabkonfiguration und Inbetriebnahme von Serienmaschinen, da auf eine fehleranfällige Einzelprojektierung in Betrieb zu nehmender Geräte verzichtet werden kann.

Entsprechend einer vorteilhaften Ausgestaltung des erfindungsgemäßen Verfahrens wird die Konfigurationsanforderung bei ihrer Übermittlung zum Konfigurationsserver durch jede weiterleitende Verteilereinheit um den jeweiligen weiteren topologischen Gerätenamensbestandteil ergänzt.

Entsprechend einer alternativen vorteilhaften Ausgestaltung der vorliegenden Erfindung wird die Konfigurationsinformation bei ihrer Übermittlung zum Kommunikationsgerät durch jede weiterleitende Verteilereinheit um den jeweiligen weiteren topologischen Gerätenamensbestandteil ergänzt. Dabei weist der Konfigurationsserver dem Kommunikationsgerät vorzugsweise nur den einen ersten topologischen Gerätenamensbestandteil zu.

Der Konfigurationsserver signiert die Konfigurationsinformation entsprechend einer bevorzugten Ausgestaltung des erfindungsgemäßen Verfahrens mit einem dem Konfigurationsserver zugeordneten elektronischen Schlüssel elektronisch. Eine entsprechende Signatur der Konfigurationsinformation kann damit durch das zu konfigurierende Kommunikationsgerät vor einer Übernahme der Konfigurationsinformation verifiziert werden. Hierdurch erfolgt eine explizite Sicherung einer Kommunikationsbeziehung zwischen Konfigurationsserver und zu konfigurierendem Kommunikationsgerät. Kommunikationsbeziehungen zwischen Konfigurationsserver und Verteilereinheiten werden vorzugsweise zumindest implizit im Rahmen einer Inbetriebnahme der Verteilereinheiten gesichert.

Die Konfigurationseinheit übermittelt das Datagramm mit der Konfigurationsanforderung vorzugsweise als Multicast-Nachricht. Darüber hinaus kann der Konfigurationsserver mehreren Teilnetzen zugeordnet sein. In diesem Fall übermittelt die Konfigurationseinheit das Datagramm mit der Konfigurationsanforderung als Multicast-Nachricht vorteilhafterweise an eine Verteilereinheit innerhalb des Teilnetzes des Kommunikationsgeräts. Die dem Teilnetz des Kommunikationsgeräts zugeordnete Verteilereinheit leitet das Datagramm mit der Konfigurationsanforderung vorzugsweise als Unicast-Nachricht an den Konfigurationsserver weiter.

Entsprechend einer bevorzugten Ausgestaltung des erfindungsgemäßen Verfahrens umfasst die Konfigurationsanforderung des zu konfigurierenden Kommunikationsgeräts eine herstellerspezifische Option, mittels der eine Zuweisung eines Gerätenamens mit zumindest einem topologischen bzw. hierarchischen Gerätenamensbestandteil angefordert wird. Darüber hinaus fügen der Konfigurationsserver bzw. jede weiterleitende Verteilereinheit dem Datagramm mit der Konfigurationsinformation für das Kommunikationsgerät jeweils eine herstellerspezifische Option hinzu, die eine räumliche oder hierarchische Anordnung des Konfigurationsservers bzw. der jeweiligen weiterleitenden Verteilereinheit bezeichnet. Dies ermöglicht eine einfache Realisierung des erfindungsgemäßen Verfahrens, insbesondere in bereits bestehenden Kommunikationsnetzen.

Die erfindungsgemäße Verteilereinheit für einen Konfigurationsserver eines industriellen Kommunikationsnetzes ist zur Durchführung eines Verfahrens entsprechend vorangehenden Ausführungen bestimmt. Dabei ist die Verteilereinheit zur Weiterleitung von Datagrammen mit jeweils einer Konfigurationsanforderung eines Kommunikationsgeräts an einen Konfigurationsserver ausgestaltet und eingerichtet. Außerdem ist die Verteilereinheit zur Weiterleitung von Datagrammen mit jeweils einer Konfigurationsinformation des Konfigurationsservers an ein jeweiliges Kommunikationsgerät ausgestaltet und eingerichtet. Darüber hinaus ist die Verteilereinheit dazu ausgestaltet und eingerichtet, dass die Konfigurationsinformation um einen topologischen Gerätenamensbestandteil ergänzt wird, der einer räumlichen oder hierarchischen Anordnung der Verteilereinheit zugeordnet ist.

Entsprechend einer vorteilhaften Ausgestaltung der vorliegenden Erfindung kann die Verteilereinheit als DHCPv6-Relay in einen zwei Teilnetze miteinander verbindenden Router integriert sein. Alternativ dazu kann die Verteilereinheit als DHCPv6-Leightweight-Relay in einen Switch integriert sein. In diesem Fall ist die Verteilereinheit dazu ausgestaltet und eingerichtet, dass Datagramme mit Konfigurationsanforderungen vor einem Switch-Vorgang durch das DHCPv6-Leightweight-Relay verarbeitet werden.

Die vorliegende Erfindung wird nachfolgend an einem Ausführungsbeispiel anhand der Zeichnung näher erläutert. Es zeigt
- Figur 1: eine schematische Darstellung eines industriellen Automatisierungssystems mit einem DHCPv6-Server, mehreren Teilnetzen mit zugeordneten DHCPv6-Relays und einer Mehrzahl zu konfigurierender Automatisierungsgeräte mit DHCPv6-Clients,
- Figur 2: eine schematische Darstellung eines Datenaustauschs zwischen einem DHCPv6-Server und einem zu konfigurierenden DHCPv6-Client über eine Mehrzahl von DHCPv6-Relays,
- Figur 3: eine schematische Darstellung eines in einen Router integrierten DHCPv6-Relays,
- Figur 4: eine schematische Darstellung eines in einen Switch integrierten DHCPv6-Relays.

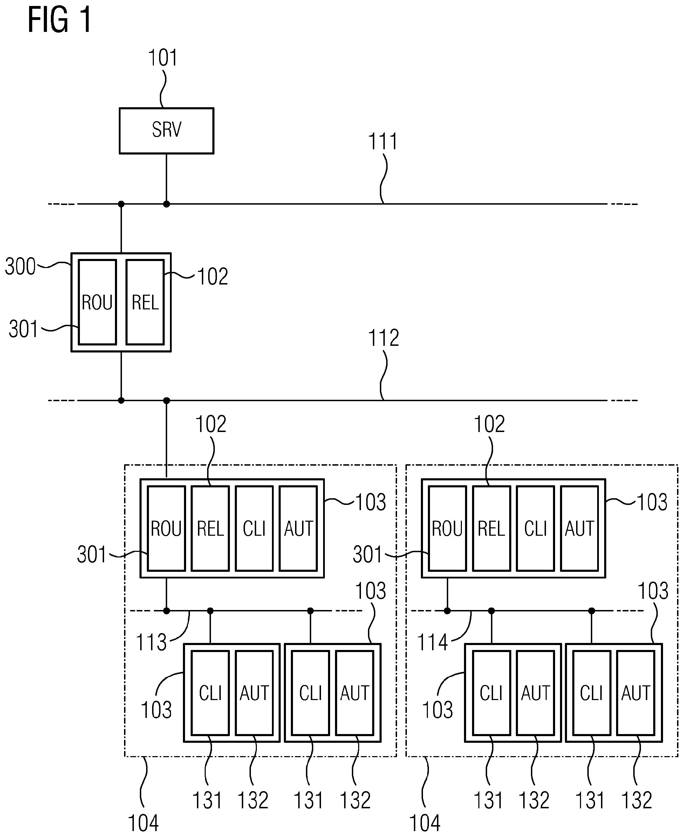

Das in Figur 1 schematisch dargestellte industrielle Automatisierungssystem umfasst einen DHCPv6-Server 101 als Konfigurationsserver, mehrere Teilnetze 111-114 mit zugeordneten DHCPv6-Relays 102 als teilnetzindividuellen Verteilereinheiten und einer Mehrzahl zu konfigurierender modularer Automatisierungsgeräte 103. Die Automatisierungsgeräte 103 sind beispielsweise speicherprogrammierbare Steuerungen einer komplexen Maschine 104 und umfassen jeweils ein Kommunikationsmodul mit einem DHCPv6-Client 131 und ein Automatisierungsmodul 132. Die Automatisierungsmodule 132 umfassen wiederum jeweils zumindest eine Zentraleinheit und eine Eingabe/AusgabeEinheit. Die Eingabe/Ausgabe-Einheiten dienen einem Austausch von Steuerungs- und Messgrößen zwischen dem jeweiligen Automatisierungsgerät 103 und einer durch das Automatisierungsgerät 103 gesteuerten Maschine oder Vorrichtung. Die Zentraleinheiten der Automatisierungsmodule 132 sind insbesondere für eine Ermittlung geeigneter Steuerungsgrößen aus erfassten Messgrößen vorgesehen. Obige Komponenten der Automatisierungsgeräte 103 sind im vorliegenden Ausführungsbeispiel über ein Rückwandbus-System miteinander verbunden.

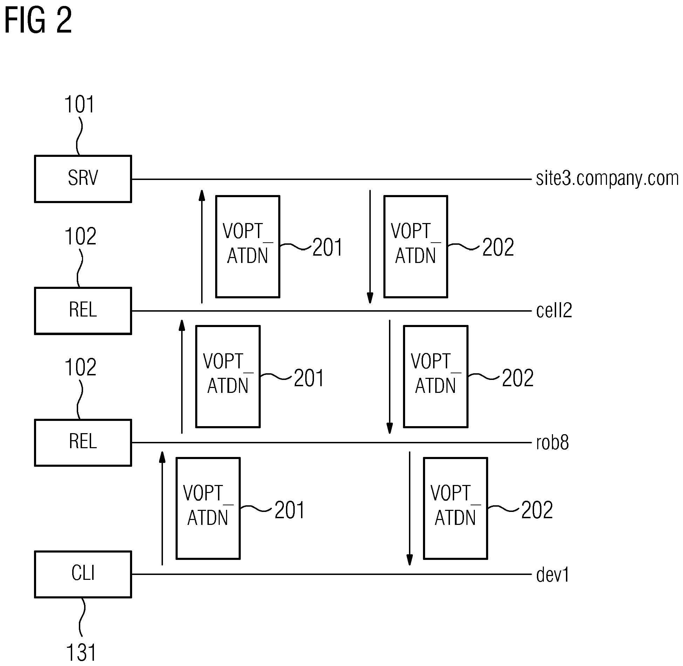

Über die Kommunikationsmodule sind die Automatisierungsgeräte 103 jeweils an ein Teilnetz 113, 114 mit weiteren Automatisierungsgeräten 103 angeschlossen. Entsprechend Figur 2 übermittelt ein DHCPv6-Client 131 als Konfigurationseinheit eines Kommunikationsmoduls bei einer Inbetriebnahme ein Datagramm 201 mit einer Konfigurationsanforderung an den DCHPv6-Server 101. Der DHCPv6-Client 131 übermittelt das Datagramm 201 mit der Konfigurationsanforderung als Multicast-Nachricht an ein DHCPv6-Relay 102 innerhalb des Teilnetzes 113, 114 des jeweiligen Kommunikationsmoduls. Dieses DHCPv6-Relay 102 leitet das Datagramm 201 mit der Konfigurationsanforderung im vorliegenden Ausführungsbeispiel als Unicast-Nachricht über ein weiteres DHCPv6-Relay 102 an den DHCPv6-Server 101 weiter. DHCPv6-Relays können grundsätzlich auch per Multicast mit einem übergeordneten DHCPv6-Server kommunizieren; voreingestellt ist im vorliegenden Ausführungsbeispiel eine Übermittlung per Unicast. Die Konfigurationsanforderung des Kommunikationsmoduls umfasst eine herstellerspezifische Option VOPT_ATDN, mittels der eine Zuweisung eines Gerätenamens mit zumindest einem topologischen bzw. hierarchischen Gerätenamensbestandteil angefordert wird.

Der DHCPv6-Server 101 weist dem Kommunikationsmodul auf die Konfigurationsanforderung zumindest einen ersten topologischen Gerätenamensbestandteil zu, der einer räumlichen oder hierarchischen Anordnung des DHCPv6-Servers 101 zugeordnet ist. Im vorliegenden Ausführungsbeispiel ist dieser erste Gerätenamensbestandteil "site3.company.com". Durch jedes weiterleitendes DHCPv6-Relay 102 wird ein weiterer topologischer Gerätenamensbestandteil ergänzt, der einer räumlichen oder hierarchischen Anordnung des jeweiligen weiterleitenden DHCPv6-Relays 102 zugeordnet ist. Dies kann sowohl bei einer Weiterleitung einer Konfigurationsanforderung als auch bei einer Weiterleitung einer Konfigurationsinformation erfolgen.

Nach Zuweisung des ersten topologischen Gerätenamensbestandteils erstellt der DHCPv6-Server 101 eine zumindest den ersten Gerätenamensbestandteil umfassende Konfigurationsinformation und übermittelt ein Datagramm 202 mit der Konfigurationsinformation an das Kommunikationsmodul. Die Konfigurationsinformation wird durch den DHCPv6-Server 101 mit einem dem DHCPv6-Server 101 zugeordneten elektronischen Schlüssel elektronisch signiert. Damit kann die Konfigurationsinformation kann später durch den jeweiligen DHCPv6-Client 131 vor einer Übernahme der Konfigurationsinformation verifiziert und ggf. als ungültig verworfen werden.

Das Datagramm 202 mit der Konfigurationsinformation wird bei seiner Übermittlung an das Kommunikationsmodul wieder mittels der DHCPv6-Relays 102 weitergeleitet. Der DHCPv6-Server 101 bzw. jedes weiterleitende DHCPv6-Relay 102 fügen dem Datagramm 202 mit der Konfigurationsinformation jeweils eine herstellerspezifische Option VOPT_ATDN hinzu, die eine räumliche oder hierarchische Anordnung des DHCPv6-Servers 101 bzw. des jeweiligen weiterleitenden DHCPv6-Relays 102 bezeichnet. Entsprechende räumliche oder hierarchische Angaben, im vorliegenden Ausführungsbeispiel "cell2" und "rob8" werden dabei wahlweise zu einer bereits vorhandenen Option VOPT_ATDN hinzugefügt oder als weitere Optionen VOPT_ATDN angehängt.

Der DHCPv6-Client 131 des zu konfigurierenden Kommunikationsmoduls erzeugt aus den topologischen Gerätenamensbestandteilen und einem innerhalb seines Teilnetzes 113, 114 eindeutigen Namensbestandteil den Gerätenamen des Kommunikationsmoduls erzeugt. Hierzu wertet des DHCPv6-Client die herstellerspezifische Option VOPT_ATDN aus.

Die DHCPv6-Relays 102 sind zur Durchführung des vorangehend beschriebenen Verfahrens konfiguriert, insbesondere zur Weiterleitung von Datagrammen mit durch DHCPv6-Clients 131 initiierten Konfigurationsanforderungen an den DHCPv6-Server 101. In umgekehrter Richtung sind die DHCPv6-Relays 102 zur Weiterleitung von Datagrammen mit Konfigurationsinformationen des DHCPv6-Servers 101 an die DHCPv6-Clients 131 konfiguriert.

Darüber hinaus sind die DHCPv6-Relays 102 dazu ausgestaltet und eingerichtet ist, dass die Konfigurationsinformation um einen topologischen Gerätenamensbestandteil ergänzt wird, der einer räumlichen oder hierarchischen Anordnung des jeweiligen DHCPv6-Relays 102 zugeordnet ist. Dies kann grundsätzlich auf zwei Weisen erfolgen. Entsprechend einer ersten Variante wird die Konfigurationsanforderung bei ihrer Übermittlung vom jeweiligen DHCPv6-Client 131 zum DHCPv6-Server 101 durch jedes weiterleitende DHCPv6-Relay um den jeweiligen weiteren topologischen Gerätenamensbestandteil ergänzt. In diesem Fall weist der DHCPv6-Server 101 dem jeweiligen DHCPv6-Client 131 sämtliche topologischen Gerätenamensbestandteile zu. Die durch den DHCPv6-Server 101 erstellte Konfigurationsinformation umfasst also sämtliche topologischen Gerätenamensbestandteile, die damit von einer elektronischen Signatur der Konfigurationsinformation umfasst sind. Entsprechend einer zweiten Variante wird die Konfigurationsinformation bei ihrer Übermittlung vom DHCPv6-Server 101 zum jeweiligen DHCPv6-Client 131 durch jedes weiterleitende DHCPv6-Relay 102 um den jeweiligen weiteren topologischen Gerätenamensbestandteil ergänzt. In diesem Fall weist der DHCPv6-Server 101 dem jeweiligen DHCPv6-Client nur den einen ersten topologischen Gerätenamensbestandteil zu.

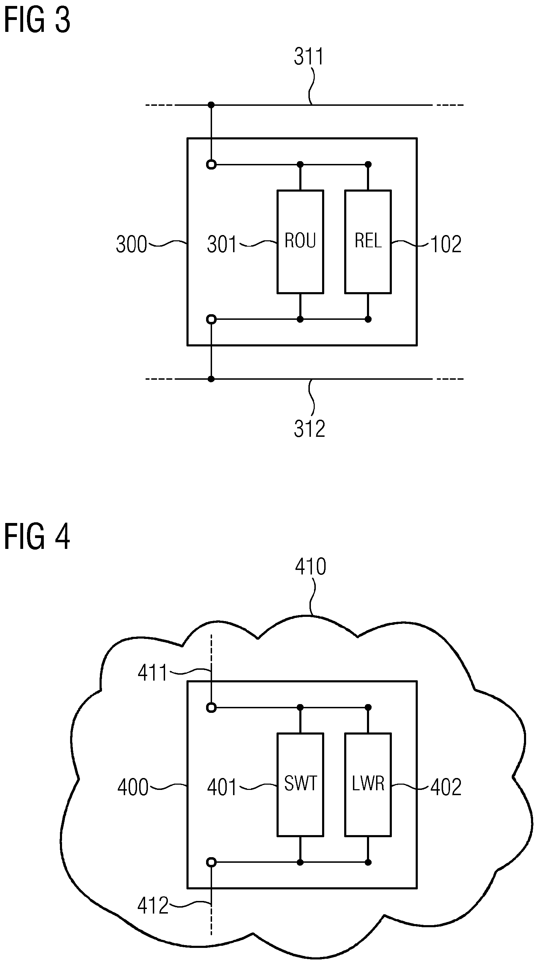

Figur 3 zeigt eine Ausführungsvariante, bei der ein DHCPv6-Relay 102 in einen zwei Teilnetze 311, 312 miteinander verbindenden Router 300 integriert ist, der neben dem DHCPv6-Relay 102 ein parallel zu diesem an beide Teilnetze 311, 312 angeschlossenes Routing-Modul 301 umfasst. Entsprechend Figur 4 kann ein DHCPv6-Leightweight-Relay 402 in einen Switch 400 integriert sein. Der Switch 400 umfasst zusätzlich zumindest zwei Link-Ports 411, 412 und ein Switch-Modul 401 für eine Datenübermittlung innerhalb eines Teilnetzes 400. Dabei ist das DHCPv6-Leightweight-Relay 402 dazu ausgestaltet und eingerichtet ist, dass Datagramme mit Konfigurationsanforderungen vor einem Switch-Vorgang durch das DHCPv6-Leightweight-Relay 402 verarbeitet werden.

## Patentansprüche

1. Verfahren zur Konfiguration eines Kommunikationsgeräts innerhalb eines industriellen Automatisierungssystems, bei dem
- eine Konfigurationseinheit (131) des Kommunikationsgeräts (103) bei einer Inbetriebnahme des Kommunikationsgeräts ein Datagramm mit einer Konfigurationsanforderung (201) an einen Konfigurationsserver (101) übermittelt,
- das Datagramm mit der Konfigurationsanforderung (201) bei seiner Übermittlung mittels zumindest einer teilnetzindividuellen Verteilereinheit (102) an den Konfigurationsserver (101) weitergeleitet wird,
- der Konfigurationsserver (101) dem Kommunikationsgerät (103) auf die Konfigurationsanforderung (201) zumindest einen ersten topologischen Gerätenamensbestandteil zuweist, der einer räumlichen oder hierarchischen Anordnung des Konfigurationsservers zugeordnet ist, wobei durch jede weiterleitende Verteilereinheit (102) ein weiterer topologischer Gerätenamensbestandteil ergänzt wird, der einer räumlichen oder hierarchischen Anordnung der jeweiligen weiterleitenden Verteilereinheit zugeordnet ist,
- der Konfigurationsserver (101) eine zumindest den ersten Gerätenamensbestandteil umfassende Konfigurationsinformation erstellt und ein Datagramm mit der Konfigurationsinformation (202) an das Kommunikationsgerät (103) übermittelt,
- das Datagramm mit der Konfigurationsinformation (202) bei seiner Übermittlung an das Kommunikationsgerät (103) mittels der zumindest einen teilnetzindividuellen Verteilereinheit (102) weitergeleitet wird,
- die Konfigurationseinheit (131) des Kommunikationsgeräts (103) aus den topologischen Gerätenamensbestandteilen und einem innerhalb seines Teilnetzes (113, 114) eindeutigen Namensbestandteil dessen Gerätenamen erzeugt.

2. Verfahren nach Anspruch 1,
bei dem die Konfigurationsanforderung (201) bei ihrer Übermittlung zum Konfigurationsserver (101) durch jede weiterleitende Verteilereinheit (102) um den jeweiligen weiteren topologischen Gerätenamensbestandteil ergänzt wird.

3. Verfahren nach Anspruch 1,
bei dem die Konfigurationsinformation (202) bei ihrer Übermittlung zum Kommunikationsgerät (103) durch jede weiterleitende Verteilereinheit (102) um den jeweiligen weiteren topologischen Gerätenamensbestandteil ergänzt wird.

4. Verfahren nach Anspruch 3,
bei dem der Konfigurationsserver (101) dem Kommunikationsgerät (103) nur den einen ersten topologischen Gerätenamensbestandteil zuweist.

5. Verfahren nach einem der Ansprüche 1 bis 4,
bei dem der Konfigurationsserver (101) die Konfigurationsinformation (202) mit einem dem Konfigurationsserver zugeordneten elektronischen Schlüssel elektronisch signiert.

6. Verfahren nach einem der Ansprüche 1 bis 5,
bei dem die Konfigurationseinheit (131) das Datagramm mit der Konfigurationsanforderung (201) als Multicast-Nachricht übermittelt.

7. Verfahren nach einem der Ansprüche 1 bis 6,
bei dem der Konfigurationsserver (101) ein DHCPv6-Server ist, und bei dem die zumindest eine teilnetzindividuelle Verteilereinheit (102) ein DHCPv6-Relay ist.

8. Verfahren nach Anspruch 7,
bei dem der Konfigurationsserver (101) mehreren Teilnetzen (111-114) zugeordnet ist, und bei dem die Konfigurationseinheit (131) das Datagramm mit der Konfigurationsanforderung (201) als Multicast-Nachricht an eine Verteilereinheit (102) innerhalb des Teilnetzes (113, 114) des Kommunikationsgeräts übermittelt, und bei dem die dem Teilnetz des Kommunikationsgeräts zugeordnete Verteilereinheit das Datagramm mit der Konfigurationsanforderung als Unicast-Nachricht an den Konfigurationsserver weiterleitet.

9. Verfahren nach einer der Ansprüche 1 bis 8,
bei dem die Konfigurationsanforderung (201) des Kommunikationsgeräts (103) eine Option, insbesondere eine herstellerspezifische Option, umfasst, mittels der eine Zuweisung eines Gerätenamens mit zumindest einem topologischen und/oder hierarchischen Gerätenamensbestandteil angefordert wird.

10. Verfahren nach Anspruch 9,
bei dem der Konfigurationsserver (101) und/oder jede weiterleitende Verteilereinheit (102) dem Datagramm mit der Konfigurationsinformation (202) für das Kommunikationsgerät (103) jeweils eine herstellerspezifische Option hinzufügen, die eine räumliche oder hierarchische Anordnung des Konfigurationsservers und/oder der jeweiligen weiterleitenden Verteilereinheit bezeichnet.

11. Verteilereinheit für einen Konfigurationsserver eines industriellen Kommunikationsnetzes zur Durchführung eines Verfahrens nach einem der Ansprüche 1 bis 10,
- wobei die Verteilereinheit (102) zur Weiterleitung von Datagrammen mit jeweils einer Konfigurationsanforderung (201) eines Kommunikationsgeräts (103) an einen Konfigurationsserver (101) ausgestaltet und eingerichtet ist,
- wobei die Verteilereinheit (102) zur Weiterleitung von Datagrammen mit jeweils einer Konfigurationsinformation (202) des Konfigurationsservers (101) an ein jeweiliges Kommunikationsgerät (103) ausgestaltet und eingerichtet ist,
- wobei die Verteilereinheit (102) dazu ausgestaltet und eingerichtet ist, dass die Konfigurationsinformation (202) um einen topologischen Gerätenamensbestandteil ergänzt wird, der einer räumlichen oder hierarchischen Anordnung der Verteilereinheit zugeordnet ist.

12. Verteilereinheit nach Anspruch 11,
bei dem die Verteilereinheit (102) als DHCPv6-Relay in einen zwei Teilnetze (311, 312) miteinander verbindenden Router (300) integriert ist.

13. Verteilereinheit nach Anspruch 11,
bei dem die Verteilereinheit als DHCPv6-Leightweight-Relay (402) in einen Switch (400) integriert ist, und bei dem die Verteilereinheit dazu ausgestaltet und eingerichtet ist, dass Datagramme mit Konfigurationsanforderungen vor einem Switch-Vorgang durch das DHCPv6-Leightweight-Relay verarbeitet werden.

## Claims

1. Method for the configuration of a communication device within an industrial automation system, wherein
- a configuration unit (131) of the communication device (103), upon start-up of the communication device, communicates a datagram with a configuration request (201) to a configuration server (101),
- the datagram with the configuration request (201) is forwarded to the configuration server (101) in the course of its communication by means of at least one subnetwork-specific distribution unit (102),
- the configuration server (101) allocates to the communication device (103) in response to the configuration request (201) at least one first topological device name component assigned to a spatial or hierarchical arrangement of the configuration server, wherein each forwarding distribution unit (102) adds a further topological device name component assigned to a spatial or hierarchical arrangement of the respective forwarding distribution unit,
- the configuration server (101) creates configuration information comprising at least the first device name component and communicates a datagram with the configuration information (202) to the communication device (103),
- the datagram with the configuration information (202) is forwarded to the communication device (103) in the course of its communication by means of the at least one subnetwork-specific distribution unit (102),
- the configuration unit (131) of the communication device (103) generates the device name thereof from the topological device name components and a name component that is unique within the subnetwork (113, 114) of said device.

2. Method according to Claim 1,
wherein the configuration request (201) is supplemented by the respective further topological device name component in the course of its communication to the configuration server (101) by each forwarding distribution unit (102).

3. Method according to Claim 1,
wherein the configuration information (202) is supplemented by the respective further topological device name component in the course of its communication to the communication device (103) by each forwarding distribution unit (102).

4. Method according to Claim 3,
wherein the configuration server (101) allocates only one first topological device name component to the communication device (103).

5. Method according to any of Claims 1 to 4,
wherein the configuration server (101) electronically signs the configuration information (202) with an electronic key assigned to the configuration server.

6. Method according to any of Claims 1 to 5,
wherein the configuration unit (131) communicates the datagram with the configuration request (201) as a multicast message.

7. Method according to any of Claims 1 to 6,
wherein the configuration server (101) is a DHCPv6 server, and wherein the at least one subnetwork-specific distribution unit (102) is a DHCPv6 relay.

8. Method according to Claim 7,
wherein the configuration server (101) is assigned to a plurality of subnetworks (111-114), and wherein the configuration unit (131) communicates the datagram with the configuration request (201) as a multicast message to a distribution unit (102) within the subnetwork (113, 114) of the communication device, and wherein the distribution unit assigned to the subnetwork of the communication device forwards the datagram with the configuration request as a unicast message to the configuration server.

9. Method according to any of Claims 1 to 8,
wherein the configuration request (201) of the communication device (103) comprises an option, in particular a manufacturer-specific option, by means of which an allocation of a device name with at least one topological and/or hierarchical device name component is requested.

10. Method according to Claim 9,
wherein the configuration server (101) and/or each forwarding distribution unit (102) add(s) to the datagram with the configuration information (202) for the communication device (103) in each case a manufacturer-specific option which designates a spatial or hierarchical arrangement of the configuration server and/or of the respective forwarding distribution unit.

11. Distribution unit for a configuration server of an industrial communication network for carrying out a method according to any of Claims 1 to 10,
- wherein the distribution unit (102) is embodied and designed for forwarding datagrams with a respective configuration request (201) of a communication device (103) to a configuration server (101),
- wherein the distribution unit (102) is embodied and designed for forwarding datagrams with respective configuration information (202) of the configuration server (101) to a respective communication device (103),
- wherein the distribution unit (102) is embodied and designed to the effect that the configuration information (202) is supplemented by a topological device name component assigned to a spatial or hierarchical arrangement of the distribution unit.

12. Distribution unit according to Claim 11,
wherein the distribution unit (102) is integrated as a DHCPv6 relay into a router (300) that connects two subnetworks (311, 312) to one another.

13. Distribution unit according to Claim 11,
wherein the distribution unit is integrated as a DHCPv6 lightweight relay (402) into a switch (400), and wherein the distribution unit is embodied and designed to the effect that datagrams with configuration requests are processed before a switch operation by the DHCPv6 lightweight relay.

## Revendications

1. Procédé de configuration d'un appareil de communication au sein d'un système d'automatisation industriel, dans lequel
- une unité (131) de configuration de l'appareil (103) de communication transmet, lors d'une mise en fonctionnement de l'appareil de communication, un datagramme ayant une demande (201) de configuration à un serveur (101) de configuration,
- le datagramme ayant la demande (201) de configuration est, lors de sa transmission, acheminé au serveur (101) de configuration à l'aide d'au moins une unité (102) de répartiteur individuelle à un sous-réseau,
- le serveur (101) de configuration envoie à l'appareil (103) de communication, sur la demande (201) de configuration, au moins un premier constituant topologique de nom d'appareil, qui est associé à un agencement spatial ou hiérarchique du serveur de configuration, dans lequel, par chaque unité (102) de répartiteur acheminante, il est complété un autre constituant topologique de nom d'appareil, qui est associé à un agencement spatial et hiérarchique de l'unité de répartiteur acheminante,
- le serveur (101) de configuration établit une information de configuration comprenant au moins le premier constituant de nom d'appareil et transmet un datagramme ayant l'information (202) de configuration à l'appareil (103) de communication,
- le datagramme ayant l'information (202) de configuration est, lors de sa transmission à l'appareil (103) de communication, acheminé au moyen de la au moins une unité (102) de répartiteur individuelle à un sous-réseau,
- l'unité (131) de configuration de l'appareil (103) de communication produit, à partir des constituants topologiques de nom d'appareil et d'un constituant de nom univoque au sein de son sous-réseau (113, 114), son nom d'appareil.

2. Procédé suivant la revendication 1,
dans lequel la demande (201) de configuration est, lors de sa transmission au serveur (101) de configuration, complétée par chaque unité (102) de répartiteur acheminante, de l'autre constituant topologique de nom d'appareil.

3. Procédé suivant la revendication 1,
dans lequel l'information (202) de configuration est, lors de sa transmission à l'appareil (103) de communication, complétée par chaque unité (102) de répartiteur acheminante, de l'autre constituant topologique de nom d'appareil.

4. Procédé suivant la revendication 3,
dans lequel le serveur (101) de configuration envoie à l'appareil (103) de communication seulement le premier constituant topologique de nom d'appareil.

5. Procédé suivant l'une des revendications 1 à 4,
dans lequel le serveur (101) de configuration signe électroniquement l'information (202) de configuration par une clé électronique associée au serveur de configuration.

6. Procédé suivant l'une des revendications 1 à 5,
dans lequel l'unité (131) de configuration transmet le datagramme ayant la demande (201) de configuration sous la forme d'un message à multidiffusion.

7. Procédé suivant l'une des revendications 1 à 6,
dans lequel serveur (101) de configuration est un serveur DHCPv6 et dans lequel la au moins une unité (102) de répartiteur individuelle au sous-réseau est un relais DHCPv6.

8. Procédé suivant la revendication 7,
dans lequel le serveur (101) de configuration est associé à plusieurs sous-réseaux (111, 114) et dans lequel l'unité (131) de configuration transmet le datagramme ayant la demande (201) de configuration, sous la forme d'un message à multidiffusion, à une unité (102) de répartiteur au sein du sous-réseau (113, 114) de l'appareil de communication et dans lequel l'unité de répartiteur, associée au sous-réseau de l'appareil de communication, achemine le datagramme ayant la demande de configuration sous la forme d'un message à diffusion unique au serveur de configuration.

9. Procédé suivant l'une des revendications 1 à 8,
dans lequel la demande (201) de configuration de l'appareil (103) de communication comprend une option, notamment une option spécifique au fabriquant, au moyen de laquelle est exigée une affectation d'un nom d'appareil à au moins un constituant topologique et/ou hiérarchique de nom d'appareil.

10. Procédé suivant la revendication 9,
dans lequel le serveur (101) de configuration et/ou chaque unité (102) de répartiteur acheminante ajoute, au datagramme ayant l'information (202) de configuration pour l'appareil (103) de communication, respectivement une option spécifique au fabriquant, qui désigne un agencement spatial ou hiérarchique du serveur de configuration et/ou de l'unité de répartiteur acheminante.

11. Unité de répartiteur pour un serveur de communication d'un réseau de communication industriel pour effectuer un procédé suivant l'une des revendications 1 à 10,
- l'unité (102) de répartiteur étant conformée et conçue pour l'acheminement de datagrammes, ayant respectivement une demande (201) de configuration d'un appareil (103) de communication, à un serveur (101) de configuration,
- l'unité (102) de répartiteur étant conformée et conçue pour l'acheminement de datagrammes, ayant respectivement une information (202) de configuration du serveur (101) de configuration à un appareil (103) de communication respectif,
- l'unité (102) de répartiteur étant conformée et conçue pour compléter l'information (202) de configuration d'un constituant topologique de nom d'appareil, qui est associé à un agencement spatial ou hiérarchique de l'unité de répartiteur.

12. Unité de répartiteur suivant la revendication 11,
dans laquelle l'unité (102) de répartiteur est intégrée sous la forme d'un relais DHCPv6 dans un routeur (300) reliant entre eux deux sous-réseaux (311, 312).

13. Unité de répartiteur suivant la revendication 11,
dans laquelle l'unité de répartiteur est intégrée dans un switch (400) sous la forme d'un relais (402) DHCPv6-Lightweight, et l'unité de répartiteur est conformée et conçue pour traiter des datagrammes ayant des demandes de configuration avant une opération de switch par le relais DHCPv6-Lightweight.
